# EUROPÄISCHE PATENTSCHRIFT

(11) **EP 2 254 031 B1**
(45) Veröffentlichungstag und Bekanntmachung des Hinweises auf die Patenterteilung: **27.08.2014**
(21) Anmeldenummer: 09006808.1
(22) Anmeldetag: 20.05.2009
(51) Int. Cl.: G06F 3/048

(54) **Verfahren zum Anzeigen eines von einem Benutzer ausgewählten Teilbereichs einer Historiengrafik**
Method for displaying a partial area of a history graphic selected by a user
Procédé d'affichage d'une zone partielle choisie par un utilisateur d'un graphique historique

(43) Veröffentlichungstag der Anmeldung: 24.11.2010
(73) Patentinhaber: VEGA Grieshaber KG, 77709 Wolfach (DE)
(72) Erfinder: Faist, Fridolin, 77709 Oberwolfach (DE); Oehler, Thomas, 77723 Gengenbach (DE); Schmidt, Andreas, 78136 Schonach (DE)
(74) Vertreter: Göhring, Robert

(56) Entgegenhaltungen:
- US-A- 5 784 067
- US-A1- 2007 214 058

## Beschreibung

Die Erfindung betrifft ein Verfahren zum Anzeigen eines von einem Benutzer mittels eines Interaktionselements einer computergestützten Benutzerschnittstelle mit grafischer Oberfläche ausgewählten Teilbereichs einer Historiengrafik gemäß Oberbegriff des Patentanspruchs 1 sowie ein System zur Durchführung dieses Verfahrens.

Zur Überwachung von industriellen Prozessen im Rahmen einer Prozessautomation werden Prozessdaten, bspw. Messdaten wie Temperatur, Druck, Füllstand usw. an eine Leitstelle bzw. Messwarte übermittelt, bzw. an eine Zentrale bzw. an einen zentralen Server zur Speicherung gegeben, so dass von dort Langzeitaufzeichnungen solcher Prozessdaten abgerufen und ausgewertet werden können.

Häufig werden auch Messstationen von der öffentlichen Hand betrieben, deren Messdaten auch der Allgemeinheit zugänglich gemacht werden.

Das Internet bietet sich als ideale Plattform an, solche Messwerte dem Benutzer zwecks Überwachung und Auswertung zugänglich zu machen. Hierbei werden die Messdaten auf einem Server abgelegt und der Zugriff auf die gewünschten Daten erfolgt über Internetanwendungen im Rahmen einer Client-Server-Struktur. Die Internetanwendungen, bei denen die Daten, bspw. auf die Zeit bezogene Messdaten als Liniengrafiken mittels einer grafischen Benutzerschnittstelle visualisiert werden, sollen Hilfsmittel zum komfortablen Navigieren innerhalb der Liniengrafik bereitstellen.

Im Bereich der Programmierung von herkömmlichen Client-Server-Anwendungen ist es bekannt, sogenannte User-Controls einzusetzen, die dem Anwender Funktionalitäten zum Darstellen von Grafiken, zum Vergrößern bzw. Verkleinern von Grafikausschnitten und zum Verschieben eines Bildausschnittes auf der kompletten Grafik bieten. Üblicherweise erfolgt das Verschieben über sogenannte Scrollbars (Bildlaufleiste), in neueren Anwendungen wird jedoch bereits mittels eines sogenannten Verschiebewerkzeugs mit einem Zeigegerät (bspw. mit einer Maus) eine beliebige Stelle eines Bildausschnittes festgehalten, um dann durch Verschieben mit dem Zeigegerät verschoben zu werden.

Auch sind bereits im Bereich der Web-Anwendungen sogenannte Charting-Komponenten bekannt, die zur Darstellung von Liniengrafiken im Webbrowser dienen und auch Elemente zum Verkleinern oder Vergrößern von Bildausschnitten sowie Lösungen zum Verschieben eines solchen Bildausschnittes auf der kompletten Grafik bieten.

Im Bereich der Routenplanung werden hochkomfortable Mechanismen zum Verschieben von Bildausschnitten auf Kartenmaterial im Webbrowser angeboten, bspw. von Google.

Im allgemeinen Bereich der Web-Anwendungen erfolgt zwar die Darstellung des angeforderten Bildausschnittes in einer sogenannten Charting-Komponente auf dem Webbrowser, die Verschiebefunktionen bieten jedoch nicht den Bedienkomfort, wie bspw. im Bereich der oben beschriebenen Routenplanung. Typischerweise bieten die oben beschriebenen Charting-Komponenten entweder nur die Bereichswahl über zusätzliche Controls wie Listboxen (Auswahl von Tag, Woche, Jahr usw.) oder Controls zur direkten Eingabe von Anfangs- und Enddatum. Weitere Varianten bieten sogenannte Scrollbars zum Verschieben eines Bildausschnitts.

Ferner sind als Varianten weitere Controls bekannt, die im Verschiebemodus anstelle der Grafik einen dicken Rahmen mit den Außenabmessungen der Grafik anzeigen. Dieser Rahmen kann dann innerhalb der Webbrowserdarstellung mit dem Zeigegerät (z. Bsp. mit einer Maus) festgehalten, verschoben und an beliebiger Stelle der Charting-Komponente wieder losgelassen werden. Die Fläche innerhalb des Rahmens ist allerdings transparent und es wird beim Verschieben des Bildausschnitts keine nachrückende Grafik sichtbar.

Die Offenbarung US 2007/0214058 beschreibt eine interaktive Einkaufsanwendung, die in einem Webbrowser des Anwenders eine dreidimensionale Wiedergabe eines Warenhauses darstellt. Ein Benutzer kann sich mittels eines Zeigegerätes durch dieses Warenhaus bewegen. Um eine möglichst flüssige Darstellung einzelner Elemente, insbesondere einzelner Shops in diesem Warenhaus zu ermöglichen, werden abhängig von der Bewegungsrichtung und Geschwindigkeit des Zeigegeräts Einzelelemente, die in dieser Bewegungsrichtung liegend ausgewählt werden könnten, in einen Speicher vorgeladen. Bei einer Annäherung oder Auswahl können diese Elemente anschließend beschleunigt angezeigt werden. Die vorgeladenen Daten werden abhängig von einem Abschluss einer Nutzeraktion, beispielsweise durch Klicken oder Verweilen auf einem auswählbaren Objekt, angezeigt.

Aufgabe der Erfindung ist es, ein Verfahren zum Anzeigen eines von einem Benutzer ausgewählten Teilbereichs einer Historiengrafik, deren Grafikdaten in einem Datenspeicher gespeichert sind, anzugeben, das die oben aufgeführten Nachteile vermeidet. Die Auswahl erfolgt dabei mittels eines Interaktionselements einer computergestützten Benutzerschnittstelle mit grafischer Oberfläche. Ferner ist es auch eine Aufgabe, ein System zur Durchführung des erfindungsgemäßen Verfahrens anzugeben.

Die erstgenannte Aufgabe wird gelöst durch ein Verfahren mit den Merkmalen des Patentanspruchs 1.

Hiernach wird erfindungsgemäß aus den in dem Datenspeicher gespeicherten Grafikdaten ein gegenüber dem vom Benutzer ausgewählten Teilbereich zugehöriger erweiterter Teilbereich der Historiengrafik derart bestimmt, dass der vom Benutzer ausgewählte Teilbereich von diesem zugehörigen erweiterten Teilbereich umschlossen wird und gleichzeitig im Zentrum desselben liegt, wobei die Grafikdaten des erweiterten Teilbereichs der Historiengrafik der Benutzerschnittstelle bereitgestellt werden und der vom Benutzer ausgewählte Teilbereich als Bildausschnitt des zugehörigen erweiterten Teilbereichs der Historiengrafik auf der grafischen Benutzeroberfläche abgebildet wird.

Der Benutzerschnittstelle stehen damit nicht nur die Grafikdaten des vom Benutzer ausgewählten Teilbereichs der Historiengrafik zur Verfügung, sondern die Grafikdaten eines zugehörigen erweiterten Teilbereichs der Historiengrafik mit einer im Vergleich zu dem ausgewählten Teilbereich größeren Fläche, so dass sich der ausgewählte Teilbereich genau im Zentrum der Grafik des zugehörigen erweiterten Teilbereichs befindet. Wird damit eine Verschiebefunktion der grafischen Benutzeroberfläche angewendet, liegt der dafür erforderliche Bildbereich vor, der beim Verschieben des Bildausschnittes nachrücken kann.

Das Verschieben erfolgt für den Benutzer "flüssig" in alle Richtungen, wobei der Benutzer dabei den Eindruck erhält, als ob die komplette Historiengrafik auf der Benutzeroberfläche vorhanden wäre. Dies wird für den Benutzer insbesondere dadurch deutlich gemacht, dass während des Verschiebens die Historiengrafik sich innerhalb des Bildausschnittes bewegt, so dass Teile der Grafik, die über die Grenzen des Bildausschnittes bewegt werden, verschwinden, während Teile der Grafik, die bisher nicht sichtbar sind, dynamisch nachrücken. Somit ist während des eigentlichen Verschiebevorgangs zu jedem Zeitpunkt eine vollständige Historiengrafik innerhalb des Bildausschnitts sichtbar.

Gemäß einer vorteilhaften Weiterbildung der Erfindung ist durch Scrollen mittels des Interaktionselements der Bildausschnitt innerhalb des zugehörigen erweiterten Teilbereichs der Historiengrafik verschiebbar, wobei für den verschobenen Bildausschnitt, also nach dem Ende des Verschiebens, erneut ein zugehöriger erweiterter Teilbereich der Historiengrafik aus den in dem Datenspeicher gespeicherten Grafikdaten bestimmt wird, der der Benutzerschnittstelle bereitgestellt wird.

Damit wird nach jedem abgeschlossenen Verschiebevorgang des Bildausschnittes innerhalb des zugehörigen erweiterten Teilbereichs für den verschobenen Bildausschnitt ein neuer zugehöriger erweiterter Teilbereich der Historiengrafik ermittelt und der grafischen Benutzeroberfläche zur Verfügung gestellt, wodurch auch für den verschobenen Bildausschnitt wieder in gleicher Weise ein "flüssiges" Verschieben dieses Bildausschnittes innerhalb des neuen zugehörigen erweiterten Teilbereichs der Historiengrafik ermöglicht wird.

Die Verschiebefunktion bei einer Weiterbildung der Erfindung erfolgt mittels des Interaktionselements, vorzugsweise durch ein Zeigegerät (bspw. durch eine Maus) auf dem abgebildeten Bildausschnitt, indem ein gerichteter Verschiebeweg markiert wird, der die Richtung und Länge der Verschiebung des Bildausschnittes bestimmt. Dies führt zu einer intuitiven und komfortablen Methode zum Navigieren innerhalb eines Bildausschnittes.

Besonders vorteilhaft ist es, wenn aus den in dem Daten-Speicher abgelegten Daten wenigstens eine Liniengrafik zur Darstellung in einem kartesischen Koordinatensystem mit wenigstens zwei Achsen, vorzugsweise eine x-Achse und eine y-Achse erstellt wird und vorzugsweise die Liniengrafik auf jeder Achse des kartesischen Koordinatensystems im Rahmen des erweiterten Teilbereichs der Historiengrafik mittels des Interaktionselements scrollbar ist.

In einer Weiterbildung der Erfindung erfolgt das Scrollen mittels des Zeigers eines Zeigegerätes (bspw. eine Maus) als Interaktionselement, indem durch Bewegen des Zeigers unter Betätigen eines zusätzlichen Elements des Zeigegerätes ein Verschiebeweg markiert wird. Dabei wird vorzugsweise die Anzahl der auf dem Verschiebeweg überfahrenen Bildpixel erfasst und hieraus sowie den Grafikdaten des aktuellen Bildausschnittes die Grafikdaten des verschobenen Bildausschnittes und des zugehörigen erweiterten Teilbereichs der Historiengrafik ermittelt.

Besonders bevorzugt bei einer Grafikdarstellung in einem kartesischen Koordinatensystem ist es, wenn zur Ermittlung der Grafikdaten des verschobenen Bildausschnittes und des zugehörigen erweiterten Teilbereichs der Historiengrafik aus den ursprünglichen Anfangs- und Endwerten der Achsen des kartesischen Koordinatensystems die neuen Anfangs- und Endwerte der Achsen mittels der überfahrenen Bildpixel errechnet werden.

Da es sich bei den Grafikdaten bevorzugt um Messdaten handelt, stellt die x-Achse des kartesischen Koordinatensystems eine Zeit-Achse dar, dann wird insbesondere zum Scrollen der Liniengrafik der Verschiebeweg auf der Zeit-Achse markiert, die Anzahl der überfahrenen Bildpixel in Zeiteinheiten umgerechnet und die Anfangs- und Endwerte der Zeit-Achse werden mittels dieser Zeiteinheiten für die Grafikdaten des verschobenen Bildausschnittes und für den zugehörigen erweiterten Teilbereich der Historiengrafik bestimmt.

Im Falle der Darstellung von Liniengrafiken ist neben der eigentlichen Liniengrafik auch die Darstellung der zugehörigen Achsenteilung und Achsenbeschriftung für den Benutzer von Bedeutung, so dass bei einer Weiterbildung der Erfindung die Abbildung der Achsen des kartesischen Koordinatensystems mit der Abbildung der Liniengrafik synchronisiert wird.

Zum Auswählen eines Teilbereichs der abgebildeten Historiengrafik durch den Benutzer weist die grafische Benutzerschnittstelle eine Zoom-Funktion auf, die mittels eines Interaktionselements realisiert ist. Zusätzlich ist es vorgesehen, dass zum Auswählen eines Teilbereichs der abgebildeten Historiengrafik der Benutzer eine Direktauswahl vornehmen kann.

Die zweitgenannte Aufgabe wird gelöst durch ein System zum Durchführen des erfindungsgemäßen Verfahrens mit den Merkmalen des Patentanspruchs 14.

Ein solches System zum Durchführen des erfindungsgemäßen Verfahrens umfasst einen Computer mit einer Benutzerschnittstelle und einen Speicher zum Speichern des zum durch den Benutzer ausgewählten Teilbereich zugehörigen erweiterten Teilbereich der Historiengrafik und einen Server, der über ein Telekommunikationsnetz mit dem Computer als Client kommuniziert. Vorzugsweise ist der Server als Web-Server ausgebildet.

Besonders vorteilhaft ist es, wenn zur Kommunikation mit dem Web-Server auf dem Computer ein Internet-Browser installiert ist, womit insbesondere die Grafiken mittels dieses Internet-Browsers dargestellt werden. Es sind vorteilhafterweise keinerlei zusätzlichen Installationen auf dem Client-Rechner notwendig.

Die Erfindung wird nachfolgend anhand eines Ausführungsbeispiels unter Bezugnahme auf die beigefügten Figuren ausführlich beschrieben. Es zeigen:
- Figur 1: eine schematische Darstellung eines Systems zur Anwendung des erfindungsgemäßen Verfahrens,
- Figur 2: ein Webbrowserfenster einer grafischen Benutzeroberfläche mit einem ausgewählten Teilbereich einer Historiengrafik mit Liniengrafiken,
- Figur 3: eine schematische Darstellung eines zum ausgewählten Teilbereich einer Historiengrafik zugehörigen erweiterten Teilbereich gemäß der Erfindung,
- Figur 4: ein weiteres Webbrowserfenster einer grafischen Benutzeroberfläche mit einem ausgewählten Teilbereich einer Historiengrafik mit Liniengrafiken,
- Figur 5: eine Darstellung eines erweiterten Teilbereichs der Historiengrafik mit Liniengrafiken gemäß der Erfindung, und
- Figur 6: eine Darstellung des ausgewählten Teilbereichs als Bildausschnitt des zugehörigen erweiterten Teilbereichs der Historiengrafik mit Liniengrafiken gemäß der Erfindung.

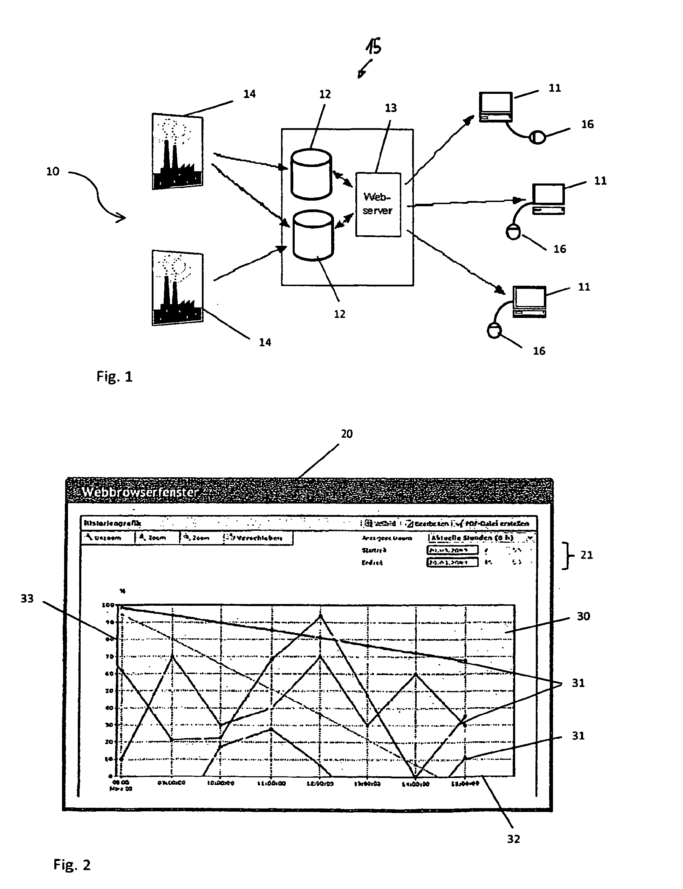

Die Figur 1 zeigt beispielhaft ein System 10, bei dem mittels Messstationen 14 (bspw. im Rahmen eines industriellen Prozesses einer Industrieanlage) auf die Zeit bezogenen Messwerte erfasst und einer Zentrale 15 übergeben werden, in der die Messdaten in Datenspeicher 12 zentral archiviert werden. Dabei kann es sich um mehrere Messstationen 14, mit jeweils mehreren Messkanälen handeln. Mittels einer Webapplikation ist es möglich, dass ein Benutzer an einer Benutzerschnittstelle 11 als Client mit grafischer Oberfläche, Tastatur und Anzeigegerät (Maus) 16 mit einem Webbrowser die Messdaten als Historiengrafiken über das Internet von einem Webserver 13 abrufen und auf seiner grafischen Oberfläche darstellen kann. Die Zentrale 15 stellt zusammen mit den Benutzerschnittstellen 11 eine Client-Server-Struktur dar.

Ein solches Webbrowserfenster 20 zeigt Figur 2 mit einer Liniengrafik 30, die aus mehreren Kurven 31 in einem x-y-Koordinatensystem mit einer Zeitachse 32 und einer skalierten y-Achse 33 besteht.

Mittels einer Menü-Leiste 21 können unterschiedliche Funktionalitäten der Historiengrafik ausgewählt werden, wie Ein- und Auszoomen, Verschieben. Auch kann hinter dem Textfeld ein Kalender-Control oder eine Bereichsliste hinterlegt sein, die der Benutzer durch Anklicken aktivierten kann.

Fordert nun der Benutzer durch Auswahl mit Zoomwerkzeug oder über Bereichsdefinitionen in anderer Form (bspw. mittels Kalender-Control oder Bereichsliste) einen Teilbereich der Liniengrafik an, so wird diese Anforderung vom Webbrowser als XML an den Web-Server 13 gemäß Figur 1 weitergeleitet. Bei der Auswahl über Zoomwerkzeuge wird der gewünschte Bereich im Webbrowser über Java-Scripte ermittelt, bevor die Weiterleitung zum Web-Server 13 als XML erfolgt. Hierbei ist zu erwähnen, dass das http-Protokoll für die Kommunikation zwischen Client und Server genutzt wird und per JavaScript die Kommunikation vom Client zum Server (via http) angestoßen wird. Die eigentliche Information wird dabei als XML übertragen.

Im Web-Server 13 wird nun der vom Benutzer ausgewählte Teilbereich der Historiengrafik als Bild aufgebaut, wobei nicht nur der geforderte Bildbereich, also der vom Benutzer ausgewählte Teilbereich der Historiengrafik erzeugt wird, sondern ein zugehöriger erweiterter Teilbereich der Historiengrafik, der als Bild mindestens die achtfache Fläche des angeforderten Bildbereichs aufweist, wobei der vom Benutzer ausgewählte Teilbereich sich genau im Zentrum des zugehörigen erweiterten Teilbereichs der Historiengrafik befindet.

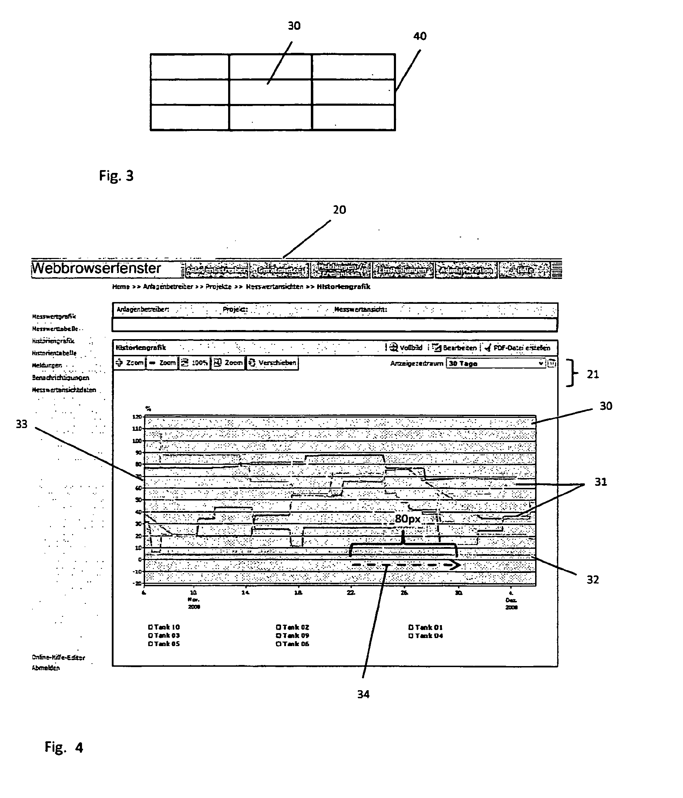

Diese Situation ist schematisch in Figur 3 dargestellt. Dort ist der von einem Benutzer ausgewählte Teilbereich mit dem Bezugszeichen 30 bezeichnet, der im Zentrum einer 3x3-Matrix liegt, deren Fläche den zugehörigen erweiterten Teilbereich 40 darstellt, der von dem Web-Server 13 als Bildbereich erzeugt wird. Der von dem Benutzer ausgewählte Teilbereich 30 wird von dem zugehörigen erweiterten Teilbereich 40 der Historiengrafik umschlossen.

Dieser zum ausgewählten Teilbereich 30 zugehörige erweiterte Teilbereich 40 wird vom Web-Server 13 an den Webbrowser der Benutzerschnittstelle 11 zurückgesendet, wobei beim Zurückliefern dem Webbrowser über JavaScript das HTML-Element DIV mitgeteilt wird, welcher Bereich der gelieferten Grafik im Browser in der Historiengrafik sichtbar sein soll, der dem vom Benutzer ausgewählten Teilbereich 30 entspricht.

Dies heißt konkret, dass gemäß dem Ausführungsbeispiel nach Figur 2 ein Benutzer folgenden Teilbereich 30 auswählt:
Startwert: 30.03.2009; 08:00:00 Uhr
Endwert: 30.03.2009; 15:00:00 Uhr

Der Web-Server 13 erstellt jedoch den zugehörigen erweiterten Teilbereich 40 bspw. mit folgendem Start- und Endwert:
Startwert: 30.03.2009; 01:00:00 Uhr
Endwert: 30.03.2009; 22:00:00 Uhr

Dieser Teilbereich 40 wird an den Webbrowser zurückgesendet, wobei aufgrund des mitgeteilten DIV-Elements in dem Webbrowserfenster 20 nach Figur 2 nur der ausgewählte Teilbereich als Bildausschnitt 30 des erweiterten Teilbereichs 40 dargestellt wird. Weitere Details werden weiter unter erläutert.

Wird nun eine Verschiebeaktion angewendet, bspw. durch Überfahren des ausgewählten Teilbereichs 30 mit dem Mauszeiger unter gleichzeitigem Gedrückt halten einer Maustaste (bspw. der linken Taste), wird die Grafik festgehalten und ist mit der Bewegung des Mauszeigers im Rahmen des vom Benutzer ausgewählten Teilbereich 30 verschiebbar. Dadurch, dass im Webbrowser nicht nur der ausgewählte Teilbereich 30 der Historiengrafik geladen ist, sondern ein wesentlich größerer Teil, nämlich wie oben beschrieben, ein zugehöriger erweiterter Teilbereich 40 der Historiengrafik, liegt der erforderliche Bildbereich dem Webbrowser vor, der beim Verschieben innerhalb des vom Benutzer ausgewählten Teilbereich s nachrückt, d. h. Teile der Grafik aus dem Bildausschnitt verwinden und andere Teile der Grafik rücken in den Bildausschnitt nach.

Die Verschiebefunktion wird typischerweise mit Dynamic HTML-Mitteln realisiert. Hierfür stehen Technologien wie Java Script, Document Object Model (DOM), AJAX und weitere bekannte Mittel zur Verfügung.

Wird die Verschiebefunktion durch Loslassen der verschobenen Grafik abgeschlossen, also bei Verwendung einer Maus durch Loslassen der gedrückten Maustaste, wird für den nun vorliegenden ausgewählten Teilbereich sofort wieder ein zugehöriger erweiterter Teilbereich mit dem jetzt aktuellen Teilbereich im Zentrum erzeugt und in den Webbrowser nachgeladen, wie dies im Folgenden erläutert wird.

Figur 4 zeigt wieder ein Webbrowserfenster 20 mit einer von einem Benutzer ausgewählten Teilbereich 30 einer Linien-Historiengrafik, die Messwerte mehrerer Messstellen als Kurven 31 zeigt. Die Zeit-Achse (x-Achse) 32 zeigt einen Zeitraum vom 06.11.2008 bis 06.12.2008 an, die Werte auf der y-Achse 33 sind skaliert mit Werten von -20% bis 120%.

Zum Verschieben des in dem Webbrowserfenster 20 nach Figur 4 ausgewählten Teilbereichs 30 wird ein Verschiebeweg 34 durch Bewegen der Maus 16 (Scrolling) bei gedrückter linker Maustaste der Maus erzeugt, der im Zeitpunkt "22.11." beginnt und am 30.11. endet, indem dort die linke Taste der Maus losgelassen wird. Bei diesem Vorgang wird, wie oben bereits erläutert, die mit dem Mauszeiger festgehaltene Grafik um diesen Verschiebeweg 34 verschoben.

Der beim Verschieben von der Maus zurückgelegte Weg wird in der Einheit "Pixel" per Java Script ausgelesen und an den Web-Server 13 als XML übertragen, der in dem genannten Zeitraum bspw. 80px in x-Richtung und 0px in y-Richtung beträgt.

In dem Web-Server 13 wird der in "Pixelzahl" angegebene Verschiebeweg 34 in Zeiteinheiten umgerechnet. Ausgehend von einer Pixelzahl in x-Richtung und y-Richtung des dargestellten Teilbereichs 30 von 733px bzw. 305px entsprechen 60px einer Verschiebezeit von 8 Tagen.

In einem nächsten Schritt wird die neue Start- und Endzeit der x-Achse durch Subtrahieren der errechneten Verschiebezeit von der bisher dargestellten Start- und Endzeit errechnet:
Neue Startzeit: 06.11. - 8 Tage= 29.10.
Neue Endzeit: 06.12. - 8 Tage= 28. 11.

Damit ergibt sich ein neuer Anzeigezeitraum: 29.10. bis 28.11.

Da in y-Richtung nicht verschoben wird, bleibt die Y-Achse unverändert.

Zusätzlich wird in dem Web-Server 13 der zugehörige erweiterte Teilbereich 40 ermittelt, indem weitere Teilbereiche in allen Richtungen an die Achsen angehängt werden, wie dies das Schema nach Figur 3 darstellt.

Der zugehörige erweiterte Teilbereich 40 weist bspw. folgende Werte für die x- und y-Achse auf:
x-Achse: 30.09. (Startzeit) bis 28.12. (Endzeit)
y-Achse: 260% (Maximum) bis - 160% (Minimum).

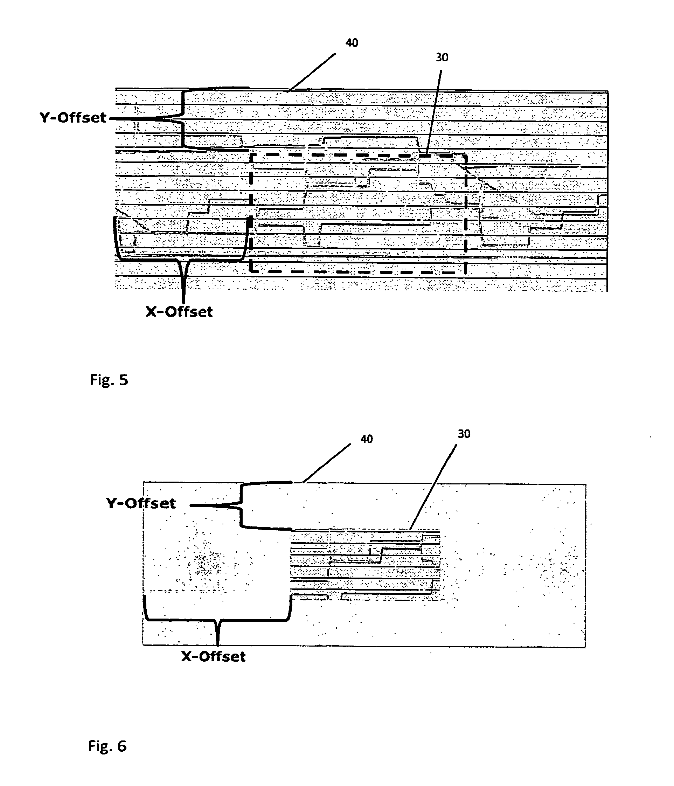

Mit diesen erweiterten Start- und Endzeiten wird der zugehörige erweiterte Teilbereich 40 als Grafik mit der Komponente "ChartDirector" generiert, wie dies in Figur 5 dargestellt ist. Danach werden die horizontalen und vertikalen Offsets, in Figur 5 als X-Offset und Y-Offset bezeichnet, mittels Dreisatzrechnung ermittelt. Diese Offsets stellen den Abstand in "Pixel" der errechneten neuen Startzeit von der errechneten erweiterten Startzeit dar.

In einem weiteren Schritt werden das generierte Bild des erweiterten Teilbereichs 40, die errechneten Offsets, die neue errechnete Start- und Endzeit und die neue erweiterte Start- und Endzeit des erweiterten Teilbereichs 40 an den Webbrowser übertragen und mit diesen Daten ein Update des Client, also der Benutzerschnittstelle 11 durchgeführt. Das heißt, es erfolgt eine Positionierung des empfangenen Bildes des erweiterten Teilbereichs 40 innerhalb eines HTML-Div-Elements mittels der ebenfalls empfangenen X- und Y-Offsets sowie eine Darstellung des Anzeigezeitraums, den der Benutzer durch die durchgeführte Verschiebeaktion wählte, indem das DIV-Element alle überstehenden Bild-Teile entsprechend der Figur 6 abschneidet, so dass nur der ausgewählte Teilbereich als Bildausschnitt 30 des zugehörigen erweiterten Teilbereichs der Historiengrafik sichtbar ist.

Die Historiengrafik wird als Liniengrafik ohne die x- und y-Achsen, also ohne die zugehörige Achsenteilung und Achsenbeschriftung erstellt, wobei beim horizontalen Scrollen die y-Achse bestehen bleibt.

Die gesonderte Erstellung der x- und y-Achsen erfolgt gleichzeitig mit dem eben beschriebenen Vorgang nach dem gleichen Schema wie die oben erläuterte Errechnung der neuen erweiterten Achsenwerte bzw. der Position der erweiterten Teilbereiche der Historiengrafik. Damit liegen drei unabhängige Bilder vor, die miteinander synchronisiert werden müssen. So wird gleichzeitig mit dem oben beschriebenen Schritt die Synchronisierung der x- und y-Achsen mit dem erweiterten Teilbereich der Historiengrafik durchgeführt, wobei sich die Achsendarstellung auch während des Verschiebevorgangs immer dynamisch an den gerade sichtbaren Bildbereich, der dem ausgewählten Teilbereich entspricht, anpasst.

Damit ist es nun möglich, dem Benutzer eine Sicht auf einen Bildausschnitt einer beliebig großen Historiengrafik zu ermöglichen, wobei dem Benutzer bei jeder Interaktion das Gefühl vermittelt wird, als wäre die komplette Historiengrafik bereits im Webbrowser geladen. Damit ist ein "flüssiges" Verschieben des Bildausschnittes möglich, da während des Verschiebevorgangs keine Ladezeiten erforderlich sind, sondern erst nach Ende eines Verschiebevorgangs, also bspw. erst nach dem Loslassen einer Maustaste.

### Bezugszeichenliste

- 10: Client-Server-Struktur mit Messstellen bzw. Messstationen
- 11: Benutzerschnittstelle mit grafischer Oberfläche
- 12: Datenspeicher eine Web-Servers 3
- 13: Web-Server
- 14: Messstellen bzw. Messstationen
- 15: Zentrale
- 20: Webbrowserfenster
- 21: Menü-Leiste
- 30: ausgewählter Teilbereich einer Historiengrafik
- 31: Kurven in dem Teilbereich der Historiengrafik
- 32: x-Achse des Teilbereichs der Historiengrafik
- 33: y-Achse des Teilbereichs der Historiengrafik
- 34: Verschiebeweg
- 40: dem ausgewählten Teilbereich 30 zugehöriger erweiterter Teilbereich der Historiengrafik

## Patentansprüche

1. Verfahren zum Anzeigen eines von einem Benutzer mittels eines Interaktionselements (16) einer computergestützten Benutzerschnittstelle (11) mit grafischer Oberfläche ausgewählten Teilbereichs (30) einer Historiengrafik, deren Grafikdaten in einem Datenspeicher (12) gespeichert sind, **dadurch gekennzeichnet, dass**
- aus den Grafikdaten ein gegenüber dem vom Benutzer ausgewählten Teilbereich (30) zugehöriger erweiterter Teilbereich (40) der Historiengrafik derart bestimmt wird, dass der vom Benutzer ausgewählte Teilbereich (30) umschlossen wird und gleichzeitig im Zentrum des zugehörigen erweiterten Teilbereichs (40) der Historiengrafik liegt,
- die Grafikdaten des erweiterten Teilbereichs (40) der Historiengrafik der Benutzerschnittstelle (11) bereitgestellt werden, und
- der vom Benutzer ausgewählte Teilbereich als Bildausschnitt (30) des zugehörigen erweiterten Teilbereichs (40) der Historiengrafik auf der grafischen Benutzeroberfläche (11) abgebildet wird.

2. Verfahren nach Anspruch 1,
**dadurch gekennzeichnet, dass**
- durch Scrollen mittels des Interaktionselements (16) der Bildausschnitt (30) innerhalb des zugehörigen erweiterten Teilbereichs (40) der Historiengrafik verschiebbar ist, und
- für den verschobenen Bildausschnitt (30) ein zugehöriger erweiterter Teilbereich (40) der Historiengrafik aus den in dem Datenspeicher (12) gespeicherten Grafikdaten bestimmt wird, der der Benutzerschnittstelle (11) bereitgestellt wird.

3. Verfahren nach Anspruch 2,
**dadurch gekennzeichnet, dass** mittels des Interaktionselements (16) auf dem abgebildeten Bildausschnitt (30) ein gerichteter Verschiebeweg (34) markiert wird, der die Richtung und Länge der Verschiebung des Bildausschnittes (30) bestimmt.

4. Verfahren nach Anspruch 1,2 oder 3,
**dadurch gekennzeichnet, dass** aus den in dem Daten-Speicher (12) abgelegten Daten wenigstens eine Liniengrafik zur Darstellung in einem kartesischen Koordinatensystem mit wenigstens zwei Achsen (32, 33) erstellt wird.

5. Verfahren nach Anspruch 4,
**dadurch gekennzeichnet, dass** die Liniengrafik auf jeder Achse (32, 33) des kartesischen Koordinatensystems im Rahmen des erweiterten Teilbereichs (40) der Historiengrafik mittels des Interaktionselements (16) scrollbar ist.

6. Verfahren nach einem der Ansprüche 3 bis 6,
**dadurch gekennzeichnet, dass** das Scrollen mittels des Zeigers eines Zeigegerätes (16) als Interaktionselement erfolgt, indem durch Bewegen des Zeigers unter Betätigen eines zusätzlichen Elements des Zeigegerätes ein Verschiebeweg (34) markiert wird.

7. Verfahren nach Anspruch 6,
**dadurch gekennzeichnet, dass** die Anzahl der auf dem Verschiebeweg (34) überfahrenen Bildpixel erfasst wird und hieraus sowie den Grafikdaten des aktuellen Bildausschnittes (30) die Grafikdaten des verschobenen Bildausschnittes (30) und des zugehörigen erweiterten Teilbereichs (40) der Historiengrafik ermittelt werden.

8. Verfahren nach Anspruch 7,
**dadurch gekennzeichnet, dass** zur Ermittlung der Grafikdaten des verschobenen Bildausschnittes (30) und des zugehörigen erweiterten Teilbereichs (40) der Historiengrafik aus den ursprünglichen Anfangs- und Endwerten der Achsen (32, 33) des kartesischen Koordinatensystems die neuen Anfangs- und Endwerte der Achsen mittels der überfahrenen Bildpixel errechnet werden.

9. Verfahren nach einem der Ansprüche 4 bis 8,
**dadurch gekennzeichnet, dass** die x-Achse des kartesischen Koordinatensystems eine Zeit-Achse (32) darstellt.

10. Verfahren nach Anspruch 9,
**dadurch gekennzeichnet, dass** zum Scrollen der Liniengrafik der Verschiebeweg (34) markiert wird, die Anzahl der überfahrenen Bildpixel in Zeiteinheiten umgerechnet wird und die Anfangs- und Endwerte der Zeit-Achse (32) mittels dieser Zeiteinheiten für die Grafikdaten des verschobenen Bildausschnittes (30) und für den zugehörigen erweiterten Teilbereich (40) der Historiengrafik bestimmt werden.

11. Verfahren nach einem der Ansprüche 4 bis 10,
**dadurch gekennzeichnet, dass**
die Abbildung der Achsen (32, 33) des kartesischen Koordinatensystems mit der Abbildung der Liniengrafik synchronisiert wird.

12. Verfahren nach einem der vorhergehenden Ansprüche,
**dadurch gekennzeichnet, dass** zum Auswählen eines Teilbereichs (30) der Historiengrafik durch den Benutzer eine Zoom-Funktion mittels eines Interaktionselements (16) vorgesehen ist.

13. Verfahren nach einem der vorhergehenden Ansprüche,
**dadurch gekennzeichnet, dass** zum Auswählen eines Teilbereichs (30) der Historiengrafik durch den Benutzer eine Direktauswahl durch den Benutzer vorgesehen ist.

14. System zum Durchführen des Verfahrens nach einem der Ansprüche 1 bis 13, umfassend
- einen Computer mit einer Benutzerschnittstelle (11) und einen Speicher zum Speichern des zum durch den Benutzer ausgewählten Teilbereich (30) zugehörigen erweiterten Teilbereichs (40) der Historiengrafik, und
- einen Server (13), der über ein Telekommunikationsnetz mit dem Computer als Client kommuniziert.

15. System nach Anspruch 14,
**dadurch gekennzeichnet, dass** der Server als Web-Server (13) ausgebildet ist.

16. System nach Anspruch 15,
**dadurch gekennzeichnet, dass** zur Kommunikation mit dem Web-Server (13) auf dem Computer ein Internet-Browser installiert ist.

17. System nach Anspruch 16,
**dadurch gekennzeichnet, dass** die Grafiken mittels des Internet-Browsers dargestellt werden.

## Claims

1. A process for displaying a portion (30) of a history graph selected by a user with an interactive element (16) belonging to a computer-supported user interface (11) with a graphic display where the graphic data of the history graph are stored in a data storage (12), **characterised in that**
- a portion (40) of the history graph which is expanded relative to the portion (30) selected by the user is established from the graphic data, such that the portion (30), selected by the user is surrounded by and simultaneously lies at the centre of the associated expanded portion (40) of the history graph,
- the graphic data of the expanded portion (40) of the history graph is provided to the user interface (11), and
- the portion selected by the user is displayed on the graphic user interface (11) as display section (30) of the associated expanded portion (40) of the history graph.

2. The process according to claim 1, **characterised in that**
- the display section (30) can be moved inside of the associated expanded portion (40) of the history graph by means of scrolling with the interactive element (16), and
- an associated expanded portion (40) of the history graph is established for the moved display section (30) from the graphic data stored in the data storage (12) and this associated expanded portion is provided to the user interface (11).

3. The process according to claim 2, **characterised in that** a directional path of movement (34) is marked on the reproduced display section (30) by means of the interactive element (16), and this path establishes the direction and length by which the display section (30) is moved.

4. The process according to claim 1, 2 or 3, **characterised in that** at least one line graph is produced from the data stored in the data storage (12) for display in a Cartesian coordinate system having at least two axes (32, 33).

5. The process according to claim 4, **characterised in that** the interactive element (16) can be used to scroll the line graph, over each axis (32, 33) of the Cartesian coordinate system, in the context of the expanded portion (40) of the history graph.

6. The process according to any one of claims 3 to 6, **characterised in that** scrolling is performed by means of the pointer of a pointing device (16), which is used as the interactive element, **in that** a path of movement (34) is marked by movement of the pointer and upon activation of an additional element belonging to the pointing device.

7. The process according to claim 6, **characterised in that** the number of image pixels traversed along the scrolling path (34) is recorded and from them and from the graphic data of the current display section (30), the graphic data of the moved display section (30) and the associated expanded portion (40) of the history graph are determined.

8. The process according to claim 7, **characterised in that** in determining the graphic data of the moved display section (30) and of the associated expanded portion (40) of the history graph, from the original start and end values of the axes (32, 33) of the Cartesian coordinate system, the new start and end value of the axes are calculated using the traversed image pixels.

9. The process according to any one of claims 4 to 8, **characterised in that** the x axis of the Cartesian coordinate system is a time axis (32).

10. The process according to claim 9, **characterised in that** to scroll the line graph, the path of movement (34) is marked, the number of traversed image pixels is converted in units of time and from these units of time the start and end values of the time axis (32) are determined for the graphic data of the moved display section (30) and for the associated expanded portion (40) of the history graph.

11. The process according to any one of claims 4 to 10, **characterised in that** the display of the axes (32, 33) of the Cartesian coordinate system is synchronized with the display of the line graph.

12. The process according to any one of the above claims, **characterised in that** a zoom function executed with an interactive element (16) is provided to the user when selecting a portion (30) of the history graph.

13. The process according to any one of the above claims, **characterised in that** the user is provided with a direct choice in selecting a portion (30) of the history graph.

14. A system for implementing the process according to any one of claims 1 to 13, comprising
- a computer with a user interface (11) and a storage for storing the expanded portion (40) of the history graph associated with the portion (30) selected by the user, and
- a server (13), which communicates over a telecommunication network with the computer as client.

15. The system according to claim 14, **characterised in that** the server takes the form of a web server (13).

16. The system according to claim 15, **characterised in that** an internet browser is installed on the computer for communication with the web server (13).

17. The system according to claim 16, **characterised in that** the graphs are displayed by means of the internet browser.

## Revendications

1. Procédé d'affichage d'une zone partielle (30) d'un graphique historique choisie par un utilisateur au moyen d'un élément d'interactions (16) d'une interface d'utilisateur (11) assistée par ordinateur, avec une surface graphique, dont les données graphiques sont enregistrées dans une mémoire de données (12),
**caractérisé en ce qu'**
à partir des données graphiques, une zone partielle (40) du graphique historique associée élargie par rapport au domaine partiel (30) choisi par l'utilisateur est déterminée de sorte que le domaine partiel (30) choisi par l'utilisateur soit entouré par celle-ci, et soit simultanément situé au centre du domaine partiel élargi associé (40) du graphique historique,
les données graphiques du domaine partiel élargi (40) du graphique historique sont fournies à l'interface d'utilisateur (11), et
le domaine partiel (30) choisi par l'utilisateur est représenté sous la forme d'un cadrage du domaine partiel élargi (40) associé du graphique historique sur l'interface d'utilisateur (11).

2. Procédé conforme à la revendication 1,
**caractérisé en ce que**
par défilement au moyen de l'élément d'interactions (16) le cadrage (30) peut être déplacé à l'intérieur du domaine partiel élargi associé (40) du graphique historique, et
pour le cadrage (30) déplacé un domaine partiel élargi (40) associé du graphique historique est déterminé à partir des données graphiques enregistrées dans la mémoire de données (12) et est fourni à l'interface d'utilisateur (11).

3. Procédé conforme à la revendication 2,
**caractérisé en ce qu'**
au moyen de l'élément d'interactions (16) un trajet de déplacement orienté (34), qui détermine la direction et la longueur du déplacement du cadrage (30) est marqué sur le cadrage représenté.

4. Procédé conforme à la revendication 1, 2 ou 3,
**caractérisé en ce qu'**
à partir des données déposées dans la mémoire de données (12) au moins un graphique linéaire est établi pour permettre une représentation dans un système de coordonnées cartésiennes ayant au moins deux axes (32, 33).

5. Procédé conforme à la revendication 4,
**caractérisé en ce que**
le graphique linéaire peut être fait défiler au moyen de l'élément d'interactions (16) sur chacun des axes (32, 33) du système de coordonnées cartésiennes dans le cadre du domaine partiel élargi (40) du graphique historique.

6. Procédé conforme à l'une des revendications 3 à 6,
**caractérisé en ce que**
le défilement est effectué au moyen de l'index d'un appareil indicateur (16) constituant l'élément d'interactions, de sorte que, par déplacement de l'index et en actionnant un élément supplémentaire de l'appareil indicateur un trajet de déplacement (34) soit marqué.

7. Procédé conforme à la revendication 6,
**caractérisé en ce que**
le nombre de pixels d'images passant sur le trajet de déplacement (34) est détecté, et, à partir de ce nombre et des données graphiques du cadrage (30) actuel, les données graphiques du cadrage (30) déplacé et de la zone partielle élargie (40) associée du graphique historique sont déterminées.

8. Procédé conforme à la revendication 7,
**caractérisé en ce que**
pour déterminer les données graphiques du cadrage (30) déplacé et du domaine partiel élargi (40) associé du graphique historique, à partir des valeurs de début et finale initiales des axes (32, 33) du système de coordonnées cartésiennes, les nouvelles valeurs de début et finale des axes sont calculées au moyen des pixels d'images ayant passé.

9. Procédé conforme à l'une des revendications 4 à 8,
**caractérisé en ce que**
l'axe x du système de coordonnées cartésiennes représente l'axe des temps (32).

10. Procédé conforme à la revendication 9,
**caractérisé en ce que**
pour faire défiler le graphique linéaire, le trajet de déplacement (34) est marqué, le nombre de pixels d'images ayant passé est converti en unités de temps, et les valeurs de début et finale de l'axe des temps (32) ont déterminées au moyen de ces unités de temps pour les données graphiques du cadrage (30) déplacé et pour le domaine partiel élargi (40) associé du graphique historique.

11. Procédé conforme à l'une des revendications 4 à 10,
**caractérisé en ce que**
la représentation des axes (32, 33) du système de coordonnées cartésiennes est synchronisée avec la représentation du graphique linéaire.

12. Procédé conforme à l'une des revendications précédentes, **caractérisé en ce que**
pour permettre à l'utilisateur de choisir un domaine partiel (30) du graphique historique, il est prévu une fonction zoom au moyen d'un élément d'interactions (16).

13. Procédé conforme à l'une des revendications précédentes, **caractérisé en ce que**
pour permettre à l'utilisateur de choisir un domaine partiel (30) du graphique historique il est prévu un choix direct par l'utilisateur.

14. Système permettant la mise en oeuvre du procédé conforme à l'une des revendications 1 à 13,
comportant :
- un ordinateur comprenant une interface d'utilisateur (11) et une mémoire permettant d'enregistrer le domaine partiel élargi (40) du graphique historique associé au domaine partiel (30) choisi par l'utilisateur, et
- un serveur (13) qui communique en tant que client avec l'ordinateur par un réseau de télécommunications.

15. Système conforme à la revendication 14,
**caractérisé en ce que**
le serveur est réalisé sous la forme d'un serveur web (13).

16. Système conforme à la revendication 15,
**caractérisé en ce que**
pour permettre la communication avec le serveur web (13) un logiciel de navigation sur internet est installé sur l'ordinateur.

17. Système conforme à la revendication 16,
**caractérisé en ce que**
les graphiques sont représentés au moyen du logiciel de navigation sur internet.
